# EUROPÄISCHE PATENTANMELDUNG

(11) **EP 4 806 969 A1**
(43) Veröffentlichungstag der Anmeldung: **16.09.2026**
(21) Anmeldenummer: 26162493.6
(22) Anmeldetag: 05.03.2026
(51) Int. Cl.: C09J 7/40

(54) **ROLLE MIT KLEBEELEMENTEN**

(30) Priorität: 13.03.2025 DE 102025109714
(71) Anmelder: TESA SE, 22848 Norderstedt (DE)
(72) Erfinder: TINSCHMANN, Morian, 22848 Norderstedt (DE); WIENZEK, Tristan, 22848 Norderstedt (DE); BRUMMER, Benjamin, 22848 Norderstedt (DE)
(74) Vertreter: tesa SE

(57) **Zusammenfassung**

Die Erfindung betrifft eine Rolle oder Spule aus einer Klebeelementmaterialbahn umfassend zumindest eine Reihe einer Vielzahl jeweils beabstandet hintereinander angeordneter Klebeelemente, die auf einem bahnförmigen Trennmaterial so aufgebracht sind, dass vorzugsweise das Trennmaterial wicklungsinnenseitig und die Klebeelemente wicklungsaußenseitig angeordnet sind,
wobei jedes Klebelement eine Trägerschicht und eine Klebeschicht aufweist, umfassend eine Klebemasse, vorzugsweise Haftklebemasse, die auf der zum Trennmaterial zugewandten Oberfläche der Trägerschicht vorhanden ist,
dadurch gekennzeichnet, dass
zumindest ein Rand oder beide Ränder des Trennmaterials trapezförmige Einschnitte aufweisen, die jeweils zwischen zwei benachbarten Klebeelementen vorhanden sind, ohne dass die Einschnitte die Fläche der Klebeelemente unterschneiden, wobei die Basis der trapezförmigen Einschnitte der gedachte Rand des Liners bildet.

## Beschreibung

Die Erfindung bezieht sich auf eine Rolle oder Spule aus einer Klebeelementmaterialbahn umfassend zumindest eine Reihe einer Vielzahl jeweils beabstandet hintereinander angeordneter Klebeelemente, die auf einem bahnförmigen Trennmaterial so aufgebracht sind, dass vorzugsweise das Trennmaterial wicklungsinnenseitig und die Klebeelemente wicklungsaußenseitig angeordnet sind, sowie auf ein Verfahren zur Herstellung Rolle oder Spule aus einer Klebeelementmaterialbahn.

Der Einsatz von Klebeelementen ist heutzutage ein wichtiger Bestandteil vieler moderner Fertigungsverfahren. Entsprechende Klebeelemente werden dabei nicht nur zur Befestigung von Komponenten an einem Substrat verwendet, sondern dienen insbesondere auch dem Verschluss von Öffnungen in einem Substrat. Solche Öffnungen liegen zumeist fertigungsbedingt vor und stellen im späteren Produkt mögliche Schwachstellen dar, durch die beispielsweise Feuchtigkeit oder Verunreinigungen hindurchtreten können. Der Einsatz von geeigneten, zumeist einseitig klebrigen Klebeelementen zum Verschluss entsprechender Öffnungen in Subtraten stellt eine einfache sowie zeit- und kosteneffiziente Lösung dar, entsprechende Öffnungen zu verschließen und ein ungewolltes Eindringen von Verunreinigungen zu unterbinden, wobei im Stand der Technik schon heute zu diesem Zweck regelmäßig solche Klebeelemente eingesetzt werden, die infolge ihres Herstellungsverfahrens auch als Stanzlinge bezeichnet werden.

Insbesondere bei der Fertigung von komplexeren Gebilden aus Metallblechen und/oder Kunststoffen lässt es sich konstruktiv nicht vermeiden, dass in die Bleche oder Kunststoffe Löcher geschnitten werden müssen, um an dahinter liegende Hohlräume, sei es zum Lackieren oder sei es zum Verschweißen, zu gelangen.

Diese Öffnungen sind nach dem Abschluss des gewünschten Prozesses zumeist nicht mehr erforderlich, oftmals sogar störend, weil durch sie Luft, Luftfeuchtigkeit oder Wasser in das Gebilde eindringen kann, was beispielsweise zu Oxidationsprozessen (Rost) führen kann.

Grundsätzlich ist es möglich, die entsprechenden Klebeelemente manuell auf einem Substrat zu platzieren. Im Zuge der fortschreitenden Automatisierung und angesichts eines fortgesetzten Interesses an einer möglichst fehlerunanfälligen und effizienten Verfahrensführung werden jedoch automatisierbare Applikationsvorrichtungen entwickelt, die der Applikation von Klebeelementen auf ein zu beklebendes Substrat dienen.

Zur Optimierung der Handhabungseffizienz und zur Vermeidung aufwändiger Zuführsysteme werden Applikationsvorrichtungen mit einer integrierten Spenderanordnung für Klebeelemente konzipiert, in denen die Bereitstellung des Klebeelementes und die Applikationsvorrichtung gemeinsam, beispielsweise als Teil eines Endeffektors eines Roboterkopfes ausgeführt werden können.

Diese Klebeelemente werden üblicherweise in Form von Klebeelementrollen oder ₋₋spulen zur Verfügung gestellt. Hierzu wird eine Klebeelementmaterialbahn, bei dem eine Vielzahl hintereinander angeordneter Klebeelemente auf einem bahnförmigen Trennmaterial, auch als Liner bezeichnet, aufgebracht sind, zu einer Rolle oder Spule aufgewickelt, und zwar so, dass vorzugsweise der Liner wicklungsinnenseitig und die Klebeelemente wicklungsaußenseitig angeordnet sind.

Der Liner (Trennpapier, Trennfolie) ist nicht Bestandteil eines Klebebandes oder Klebeelements (Etiketts), sondern nur ein Hilfsmittel zu deren Herstellung, Lagerung oder für die Weiterverarbeitung durch Stanzen. Darüber hinaus ist ein Liner im Gegensatz zu der Trägerschicht im Klebeband oder Etikett nicht fest mit einer Klebstoffschicht verbunden.

Auf diesen Liner sind der Reihe nach voneinander beabstandet Klebeelemente mit einer Trägerschicht und einer Klebemasseschicht derart vorhanden, dass die freie Seite der Klebemasseschicht auf dem Liner aufgeklebt ist, so dass die dem Liner gegenüberliegende Seite der Klebmasseschicht von der Trägerschicht abgedeckt ist, so dass die Klebmasse vollständig geschützt ist.

Insbesondere bei kreisförmigen Klebeelementen hat es sich aus Materialersparnisgründen als vorteilhaft herausgestellt, wenn die Bahn des Liners nicht so geformt oder geschnitten ist, dass die Bahn gerade in Maschinenrichtung verlaufende Ränder aufweist. Wenn die Bahn gerade in Maschinenrichtung verlaufende Ränder aufweist, wird durch diese Art der Fertigung viel Material an Liner, das sich zwischen den Klebeelementen befindet, nicht genutzt und somit verschwendet.

Vorteilhaft ist, wenn die Ränder des Liners eine Wellenform wie eine Sinuskurve aufweisen. Die konkaven Abschnitte des Liners umhüllen das jeweilige Klebeelement, während die konvexen Abschnitte einen Einschnitt zwischen zwei benachbarten Klebeelementen ausbilden, so dass hier Material eingespart wird.

Üblicherweise werden die einzelnen Klebeelementmaterialbahnen aus einer breiten, mit einer großen Vielzahl von Klebeelementen ausgerüsteten Trägerbahn insbesondere rotativ geschnitten, indem beispielsweise Messer in Maschinenrichtung die breite Trägerbahn in einzelne, schmale Bahnen schneiden.

Die Klebeelemente befinden sich in vielen nebeneinander liegenden Reihen auf der breiten Trägerbahn. Wenn eine Reihe von Klebeelementen gegenüber der benachbarten Reihe leicht versetzt angeordnet ist, können die Abstände der beiden Reihen zueinander verringert werden, weil die breitesten Abschnitte der Klebelemente jeweils in Bereich zwischen zwei hintereinander angeordneten Klebeelemente der benachbarten Reihe einrücken können.

Wenn zum Trennen der einzelnen Reihen ein Wellenschnitt gesetzt wird, füllen die konvexen Bereiche der einen Reihe die konkaven Bereiche der benachbarten Reihe und umgekehrt.

Durch diese Art der Anordnung der Klebeelemente sowie des Schneidens ist der Verbrauch an Liner deutlich reduziert.

Auf das Verfahren zur Herstellung von Klebeelementmaterialbahn wird später detailliert eingegangen.

Aus der DE 10 2019 114 489 A1 ist ein Verfahren zum rotativen Stanzen von Folienmaterialien bekannt, bei dem die Materialausschöpfung deutlich erhöht und der Anteil an "Abfallgitter" somit erheblich reduziert werden kann.

Gemäß dem Verfahren zum rotativen Stanzen von Folienmaterialien wird zunächst eine Folienanordnung aus einer ersten Trägerfolie und einer über der ersten Trägerfolie angeordneten Folienlage bereitgestellt. Aus der Folienlage werden erste Stanzlinge derart ausgestanzt, dass die ersten Stanzlinge nach dem Stanzen von einer die ersten Stanzlinge umgebenden gitterförmigen Restfolie der Folienlage getrennt sind. Die gitterförmige Restfolie wird von einer Anordnung aus der ersten Trägerfolie und den auf der ersten Trägerfolie verbliebenen ersten Stanzlingen abgezogen. Die gitterförmige Restfolie wird über einer zweiten Trägerfolie angeordnet. Aus der gitterförmigen Restfolie werden anschließend zweite Stanzlinge derart ausgestanzt, dass die zweiten Stanzlinge nach dem Stanzen von einem übrig gebliebenen Teil der gitterförmigen Restfolie getrennt sind. Der übrig gebliebene Teil der gitterförmigen Restfolie wird von einer Anordnung aus der zweiten Trägerfolie und den auf der zweiten Trägerfolie verbliebenen zweiten Stanzlingen abgezogen.

Eine Variante des Verfahrens zeigt, dass die Stanzlinge in Längsrichtung in der Weise angeordnet sind, dass zwischen nebeneinander in Längsrichtung angeordneten Reihen der Stanzlinge kein gerader Schnitt in Längsrichtung, das heißt kein Schnitt parallel zu den Längsseiten Folie, geführt werden kann, um die in Längsrichtung nebeneinander angeordneten Reihen der Stanzlinge voneinander zu trennen. Ein solcher Längsschnitt müsste stattdessen eine wellenförmige Form aufweisen, wie sie durch eine strichlierte Linie angedeutet ist. Durch eine derartige Ausbildung der Stanzlinge kann eine optimale Materialausschöpfung der Folienlage erfolgen.

Allerdings haben die zu Rollen beziehungsweise Spulen gewickelten Klebeelementmaterialbahnen, bei denen beide Ränder des Liners wie geschildert wellenförmig geschnitten ist, in automatisierten Spendeprozessen erhebliche Nachteile.

Beim Spendevorgang wird das freie Ende der Klebeelementmaterialbahn von der Rolle oder Spule abgezogen und in eine Spendevorrichtung geführt, bis die Klebeelementmaterialbahn entweder über eine Spendekante geführt wird, so dass sich die Klebeelemente an der Spendekante von dem Liner ablösen, oder bis die Klebeelementmaterialbahn eine Stelle erreicht, an der die einzelnen Klebelemente mittels einer Vorrichtung wie eine Saugvorrichtung von der Klebeelementmaterialbahn abgenommen und an der gewünschten Position verspendet werden.

In der Spendevorrichtung wird die Klebeelementmaterialbahn oftmals randseitig geführt oder umgelenkt. Aufgrund der Tatsache, dass bei einem wellenförmigem Rand des Liners jeweils nur eine punktförmige seitliche Kontaktfläche (an der größten Breite der Welle) zu den Führungen der Spendevorrichtung bestehen, ist eine stabile Führung der Klebeelementmaterialbahn schwierig. Die Klebeelementmaterialbahn neigt darüber hinaus dazu, aufgrund des punktförmigen Druckes an den Berührungspunkten umzuschlagen, was die Präzision, mit der die Bahn geführt werden kann, noch weiter verschlechtert.

Hier versucht die Erfindung Abhilfe zu schaffen.

Aufgabe der Erfindung ist es, eine Klebeelementmaterialbahn anzugeben, die trotz reduzierter Fläche des Liners in der Klebeelementmaterialbahn, wie es von wellenförmig geschnittenen Linern bekannt ist, auch randseitig in einer Spendevorrichtung präzise geführt werden kann.

Gelöst wird diese Aufgabe durch eine Rolle oder eine Spule aus einem Klebeelementmaterialbahn, wie sie im Hauptanspruch niedergelegt ist. Gegenstand der Unteransprüche sind dabei vorteilhafte Weiterbildungen des Erfindungsgegenstands sowie Verfahren zur Herstellung Rolle oder Spule aus einer Klebeelementmaterialbahn.

Demgemäß betrifft die Erfindung eine Rolle oder Spule aus einem Klebeelementmaterialbahn umfassend zumindest eine Reihe einer Vielzahl jeweils beabstandet hintereinander angeordneter Klebeelemente, die auf einem bahnförmigen Trennmaterial so aufgebracht sind, dass vorzugsweise das Trennmaterial wicklungsinnenseitig und die Klebeelemente wicklungsaußenseitig angeordnet sind.

Die Variante, dass das Trennmaterial wicklungsinnenseitig und die Klebeelemente wicklungsaußenseitig angeordnet sind, stellt die bevorzugte Ausführungsform dar. Daneben ist auch eine Wicklung möglich, bei der das Trennmaterial wicklungsaußenseitig und die Klebeelemente wicklungsinnenseitig angeordnet sind.

Die Klebeelementmaterialbahn wird als Endlosware auf Rollen (archimedische Spirale) zur Verfügung gestellt, also scheibenförmige Klebeelementmaterialbahnrollen, die in der Fachsprache als "pan-cake" bezeichnet werden.

Alternativ kann die Klebeelementmaterialbahn wie ein Textilgarn auf einen Kern aufgespult sein, dessen Länge wesentlich größer ist als die Breite der Klebeelementmaterialbahn. Durch das Überlagern einer Rotationsbewegung des Kernes und einer axialen Bewegung des Kernes oder des Klebeelementmaterialbahn-Führungsorganes bildet die Klebeelementmaterialbahn zunächst eine erste, radial innerste Lage helixförmiger Windungen. Zum Abschluss der ersten Lage und Sprung in die zweite Lage wird bei unveränderter Rotationsbewegung die Orientierung der Axialbewegung invertiert. Zum Abschluss der zweiten Lage und Sprung in die dritte Lage wird bei weiterhin unveränderter Rotationsbewegung die Orientierung der Axialbewegung erneut invertiert, also wieder zur ursprünglichen Orientierung übergegangen. Zwischen jedem der Orientierungsumkehrpunkte bleibt der Steigungswinkel konstant. Auf diese Weise können zahlreiche Windungslagen gebildet werden, deren Windungen sich jeweils kreuzen (kreuzgewickelte Spulen).

Jedes Klebelement umfasst zumindest eine Trägerschicht und eine Klebeschicht, umfassend eine Klebemasse, vorzugsweise Haftklebemasse, die auf der zum Trennmaterial zugewandten Oberfläche der Trägerschicht vorhanden ist.

Erfindungswesentlich ist, dass zumindest ein Rand, vorzugsweise beide Ränder des Trennmaterials trapezförmige Einschnitte aufweisen, die jeweils zwischen zwei benachbarten Klebeelementen vorhanden sind, ohne dass die Einschnitte die Fläche der Klebeelemente unterschneiden, wobei die Basis der trapezförmigen Einschnitte der gedachte Rand des Liners bildet.

Gemäß einer bevorzugten Ausführungsform der Erfindung befinden sich die trapezförmigen Einschnitte in beiden Rändern des Trennmaterials.

Erfindungsgemäß wird unter einem Trapez ein Viereck mit zwei gegenüberliegenden, parallelen Seiten verstanden, die als Grundseiten ("a" und "c") bezeichnet werden, wobei die längere von den beiden Seiten Basis ("c") heißt. Die restlichen zwei Seiten ("b" und "d") werden Schenkel genannt. Vorzugsweise sind die beiden Schenkel gleich lang. Bevorzugt weisen die Einschnitte die Form eines gleichschenkligen Trapez auf. Dieses liegt vor, wenn die Schenkel b und d gleich lang sind. Dadurch wird das Trapez achsensymmetrisch. Das heißt, dass sich das Trapez an einer senkrechten Linie in der Mitte des Trapezes spiegeln lässt.

Weiter vorzugsweise weisen alle Einschnitte dieselbe Trapezform auf.

Gemäß einer weiteren vorteilhaften Ausführungsform der Erfindung sind jeweils die vier einen trapezförmigen Einschnitt bildenden Ecken nicht spitz ausgeformt, sondern weisen alle einen Radius auf, vorzugsweise alle vier den gleichen Radius. Weiter vorzugsweise weisen die Ecken aller trapezförmigen Einschnitte den gleichen Radius auf.

Das heißt, die die jeweils zwei eine Ecke bildenden Kanten laufen nicht spitz aufeinander zu, sondern diese Spitze ist abgerundet. Durch die Abrundung ist die Gefahr deutlich verringert, dass sich ein Riss in einer Spitze bildet.

Typischerweise beträgt der Radius zwischen 2 und 6 mm, vorzugsweise 4 mm.

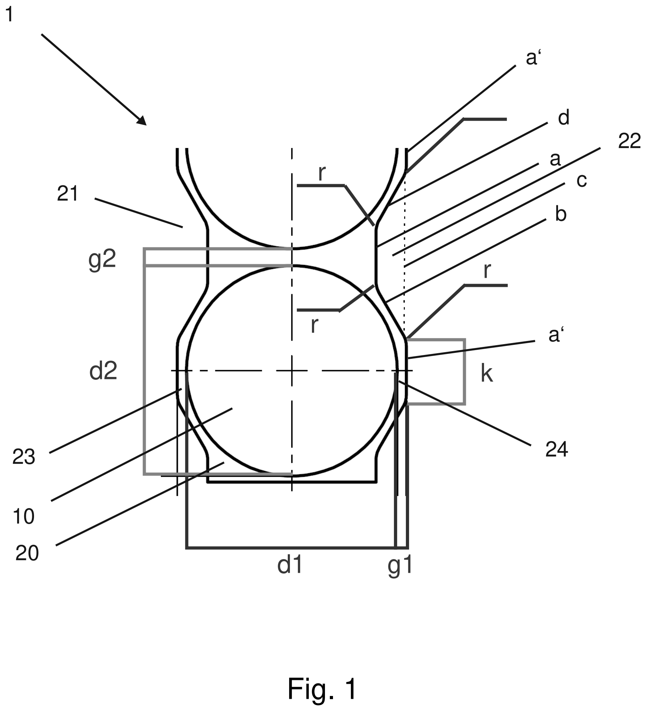

In der Figur 1 ist eine besonders vorteilhafte Ausgestaltung einer erfindungsgemäßen Klebeelementmaterialbahn 1 gezeigt.

Auf einem bahnförmigen Trennmaterial 20 ist eine Vielzahl jeweils beabstandet hintereinander angeordneter Klebeelemente 10 aufgebracht.

Die Klebeelemente 10 sind kreisförmig.

Die Breite d1 der Klebeelemente 10 und die Höhe d2 der Klebeelemente sind bei einer Kreisform identisch und entsprechen dem Durchmesser.

Typischerweise liegen bei (bevorzugt kreisförmigen) Klebeelementen 10 die Breite d1 und die Höhe d2 jeweils zwischen 10 und 50 mm, vorzugsweise zwischen 20 und 40 mm, weiter vorzugsweise 35 mm.

Der Abstand zwischen den einzelnen Klebeelementen 10 ist definiert als die Steghöhe g2. Die Steghöhe g2 liegt typischerweise zwischen 1 und 5 mm, vorzugsweise zwischen 2 und 3 mm.

Erfindungsgemäß sind in beiden Rändern des Trennmaterials 20 in vorzugsweise regelmäßigen Abständen trapezförmige Einschnitte 21, 22 vorgesehen. Jeder trapezförmiger Einschnitt 21, 22 weist zwei Grundseiten a, c sowie zwei gleich lange Schenkel b, d auf. Die Basis c der trapezförmigen Einschnitte 21, 22 bildet den gedachten Rand des Trennmaterials 20 (strichpunktiert darrgestellt).

Zwischen den Einschnitten 21, 22 befinden sich ebenfalls trapezförmige Abschnitte 23, 24, in denen das Trennmaterial 20 die größte Breite aufweist. Die kürzere Grundseite a' der trapezförmigen Abschnitte 23, 24 bildet den Rand des Trennmaterials 20. Die Länge dieser Grundseite a' ist definiert als Länge k.

Die Länge k dieser Grundseite a' ist maßgeblich für den Schutz der Klebeelemente 10 während des Transports und für das Handling sowie für die Führung in automatischen Spendevorrichtungen.

Dabei muss die Länge k zwei gegensätzliche Anforderungen erfüllen.

Zum einen sollte die Länge k immer maximal lang sein, um die oben genannten Anforderungen zu erfüllen. Zum anderen soll die Länge k so minimiert werden, dass möglichst kein Trennmaterial 20 unnötigerweise verschwendet wird.

Durch die erfindungsgemäß vorgesehenen trapezförmigen Einschnitte 21, 22 verbleibt ein gerader Seitenrand a'. Dieser Seitenrand a' bietet eine sehr viel größere Anlagefläche, so dass die Klebeelementmaterialbahn 1 präziser durch automatische Spendevorrichtungen geführt werden kann. Ein Umklappen des Trennmaterials 20, wie es bei wellenförmigen Schnitten des Trennmaterials 20 zu beobachten ist, ist signifikant reduziert.

Ein weiterer vorteilhafter Effekt ist, dass die Produktionskosten gesenkt werden können, weil weniger Trennmaterial 20 benötigt wird, was zudem die CO₂ Emissionen um über 10% reduziert.

Der Abstand der Grundseite a' von dem Klebeelement 10 in seiner größten Ausdehnung (maximalen Breite) wird als Stegbreite g1 definiert. Die Stegbreite g1 liegt typischerweise zwischen 1 und 3 mm, vorzugsweise 1,5 mm.

Die Länge k ist abhängig von der Breite d1 des Klebeelementes 10, der Höhe d2 des Klebeelementes 10, der Stegbreite g1, der Steghöhe g2 und des Radius r.

Wenn die Klebeelenente 10 eine längliche Form aufweisen, beispielsweise die typische ovale Form einer Stadionlaufbahn, wobei die Klebeelemente 10 in Maschinenrichtung ausgerichtet sind, richtet sich die Länge k nach der Länge der Klebeelemente 10.

Besonders bevorzugt ist eine Ausführungsform der Erfindung, wenn der Radius r als führender Parameter für die Charakterisierung der Erfindung folgende Bedingung erfüllt: $r \geq 0 und r < d 1 + g 1$

Bei r = d1 + g1 wäre, unabhängig von den Variablen (d2, g2), keine seitliche Kante mehr gegeben.

Gemäß einer weiteren vorteilhaften Ausführungsform der Erfindung sind die trapezförmigen Einschnitte 21, 22 und die trapezförmigen Abschnitte 23, 24 kongruent, sprich sie weisen gleiche Fläche auf. Diese Variante ist besonders vorteilhaft, wenn die Klebeelemente 10 kreisförmig sind.

Weiter vorzugsweise befindet sich zwischen jedem der jeweils beabstandet hintereinander angeordneten Klebeelemente ein trapezförmiger Einschnitt.

Die Herstellung der zur Rolle beziehungsweise zur Spule gewickelten Klebeelementmaterialbahn erfolgt nach den bekannten Verfahren.

Zunächst wird eine breite Bahn Trägerschicht mit der Klebeschicht ausgerüstet und mit einem Trennmaterial eingedeckt. Diese breite Bahn kann zu einer so genannten Mutterrolle gewickelt werden. Im nächsten Schritt wird die Mutterrolle wieder abgewickelt. Der Zwischenschritt der Auf- und Abwicklung ist nicht zwingend erforderlich.

In einem rotativen Stanzverfahren werden aus der mit einer Klebeschicht ausgerüsteten Trägerschicht Klebeelemente gestanzt und das überstehende Gitter entfernt.

Die Klebeelemente sind nach dem Stanzen auf dem Trennmaterial üblicherweise in mehreren parallelen Reihen in Längsrichtung angeordnet. Die Klebeelemente weisen sowohl in Längs- als auch in Querrichtung einen Abstand auf.

Bei Produkten, die einreihig geliefert werden, das heißt, bei denen die Klebeelemente in einer Reihe in Längsrichtung des Trennmaterials nebeneinander angeordnet sind, werden einzelne Bahnen des Trennmaterials mit den jeweils nebeneinander angeordneten Klebeelemente nach dem Stanzprozess in Längsrichtung geschnitten.

Bevorzugt ist eine einreihige Klebeelementmaterialbahn, also eine Klebeelementmaterialbahn, bei der die Klebeelemente in einer einzigen Reihe in Längsrichtung des Trennmaterials hintereinander angeordnet sind.

Erfindungsgemäß ist auch, wenn auf einer Klebeelementmaterialbahn zwei, der oder mehrere Reihen Klebeelemente vorhanden sind, in denen jeweils in Längsrichtung des Trennmaterials die Klebeelemente hintereinander angeordnet sind. Bevorzugt sind die Reihen so angeordnet, dass die einzelnen Klebeelemente in möglichst dichter Packung nebeneinander auf dem Trennmaterial liegen, um möglichst wenig Trennmaterial zu benutzen. Ein weiterer Vorteil dieser platzsparenden Anordnung ist, dass auch die zu entfernende Gitterfläche verringert wird, das heißt, es wird zusätzlich Trägerschicht und Klebeschicht eingespart. Erfindungswesentlich ist, dass das Trennmaterial an einem oder beiden Rändern trapezförmige Einschnitte aufweist.

Besonders bevorzugt ist folgendes Verfahren zur Herstellung einer Rolle oder Spule aus einer Klebeelementmaterialbahn, umfassend die folgenden Schritte:
i) Ausrüstung einer breiten Bahn Trägerschicht mit einer Klebeschicht und Eindecken mit einem Trennmaterial
ii) gegebenenfalls Wicklung zu einer Mutterrolle
iii) gegebenenfalls Abwicklung der Mutterrolle
iv) Rotatives Stanzen von Klebeelementen und Abgittern des überstehenden Materials
v) Schneiden von Klebeelementmaterialbahnen aus der Mutterrollenbahn mit erfindungsgemäßen trapezförmigen Rändern des Trennmaterials

Erfindungsgemäß bevorzugt ist ein Klebeelement, das eine Grundform aufweist, die eine geschlossene geometrische Form, also allgemein eine rundliche konvexe Figur aufweist, insbesondere ausgewählt ist aus der Gruppe bestehend aus Kreisen, Teilkreisen, insbesondere Halbkreisen, Ovalen oder Vielecken. Auch dreieckige oder rechteckige Formen sind möglich. Die Klebeelemente können auch abgerundete Ecken aufweisen. Bevorzugt ist die Form ausgewählt ist aus der Gruppe bestehend aus Kreisen, Halbkreisen und Ovalen. Besonders bevorzugt ist ein kreisförmiges Klebeelement.

Vorzugsweise umfassen die Klebeelemente eine Trägerschicht und eine damit verbundene Klebeschicht, wobei die Klebeelemente mit der Klebeschicht auf dem Trennmaterial angeordnet sind.

Üblich ist, dass die Klebeelemente Haftklebeelemente sind und/oder die Klebeschicht eine Haftklebemasse umfasst, wobei die Klebeschicht bevorzugt aus einer Haftklebemasse besteht.

Die Klebemasseschicht ist in der Regel vollflächig auf die Trägerschicht aufgebracht.

Die Klebeelemente können auch mehrere Klebeschichten aufweisen, die innerhalb der Trägerschicht vorhanden sein können, beispielsweise um die Lagen innerhalb der Trägerschicht zu fixieren.

Für die Klebeschicht der Klebeelemente kann der Fachmann auf übliche im Bereich der Klebtechnik bekannte Klebemassen zurückgreifen, beispielsweise Poly(meth)acrylat- und/oder kautschuk-basierte Systeme. Die entsprechende Klebeschicht ist in branchenüblicher Weise auf einer Trägerschicht angeordnet, welche zumeist aus einem Kunststoff gebildet wird. Auch wenn es theoretisch möglich ist, beidseitig klebrige Klebeelemente zu verarbeiten, werden in der Praxis vor allen Dingen einseitig klebrige Klebeelemente verwendet.

Die Trägerschicht kann ein- oder mehrlagig sein, beispielsweise können unterschiedliche Folienlagen zusammen eine Trägerschicht bilden. Die Trägerschicht kann ein oder mehrere Materialien umfassen, die ausgewählt sind aus der Gruppe bestehend aus Polyethylen, Polypropylen, cyclische Olefin Copolymeren, Polyvinylchlorid, Polyester, Ethylenvinylalkohol, Polyvinylidenchlorid, Polyvinylidenfluorid, Polyacrylnitril, Polycarbonat, Polyamid, Polyethersulfon und Polyimid, bevorzugt ausgewählt ist aus der Gruppe bestehend aus Polyethylen, Polypropylen und Polyethylenterephthalat, wobei die Trägerschicht bevorzugt aus diesen Materialien besteht.

Die Klebeelemente sind auf dem Trennmaterial angeordnet. Entsprechende bahnförmige Trennmaterialien sind dem Fachmann aus dem Bereich der Klebetechnik umfassend vertraut, und werden vorliegend als Trennmaterialien bezeichnet, weil sich die darauf angeordneten Klebeelemente in Folge einer verringerten Adhäsion an der Oberfläche von diesen leicht abtrennen lassen. Die Funktionalität der Trennmaterialien kann durch übliche, dem Fachmann bekannte Release-Schichten erreicht werden, die auf die Oberfläche der Trennmaterialien aufgebracht wird, wo sie beispielsweise die Grundschicht aus Kunststoff oder Papier bedeckt. Mit anderen Worten handelt es sich zumeist um ein erfindungsgemäßes Verfahren, wobei das bahnförmige erste Trennmaterial und/oder das bahnförmige zweite Trennmaterial, bevorzugt sämtliche bahnförmigen Trennmaterialien, Liner sind. Typisch ist dabei ein erfindungsgemäßes Verfahren, wobei das bahnförmige erste Trennmaterial und/oder das bahnförmige zweite Trennmaterial, bevorzugt sämtliche bahnförmigen Trennmaterialien, auf der den Klebeelementen zugewandten Seite mit einer Releaseschicht beschichtet ist, bevorzugt mit einer Silikon-Releaseschicht, wobei die Silikon-Releaseschicht bevorzugt herstellbar ist durch Vernetzung eines vernetzbaren Silikonsystems umfassend ein oder mehrere Polysiloxane.

Neben der Figur 1 werden im Folgenden Figuren erläutert, die das Schneiden von Klebeelementmaterialbahnen aus einer Mutterrollenbahn zeigen, sowie eine Rolle Klebeelementmaterialbahn, ohne damit die Erfindung unnötig einschränken zu wollen. Es zeigen
- Figur 1: eine besonders vorteilhafte Ausgestaltung einer erfindungsgemäßen Klebeelementmaterialbahn,
- Figur 2: das Schneiden von Klebeelementmaterialbahnen aus einer Mutterrollenbahn mit wellenförmigen Rändern des Trennmaterials (gemäß dem Stand der Technik),
- Figur 3: das Schneiden von Klebeelementmaterialbahnen aus einer Mutterrollenbahn mit erfindungsgemäßen trapezförmigen Rändern des Trennmaterials und
- Figur 4: eine Rolle aus einer Klebeelementmaterialbahn umfassend eine Vielzahl jeweils beabstandet hintereinander angeordneter Klebeelemente, die auf einem bahnförmigen Trennmaterial aufgebracht sind.

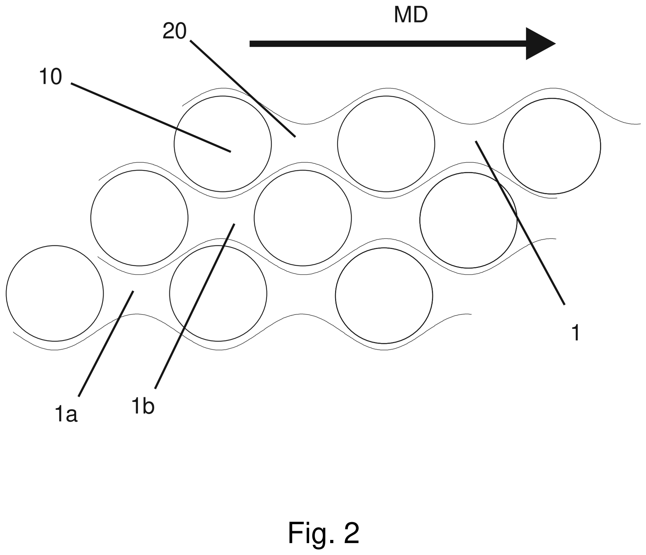

In der Figur 2 ist das Schneiden von mehreren Klebeelementmaterialbahnen 1, 1a, 1b aus einer Mutterrollenbahn gezeigt. Hierzu wird die Mutterrollenbahn mit den auf dem Trennmaterial 20 befindlichen Klebeelementen 10 in Maschinenrichtung MD in einzelne Klebeelementmaterialbahnen 1, 1a, 1b geschnitten, wobei der Schnitt so erfolgt, dass das Trennmaterial 20 der Klebeelementmaterialbahnen 1, 1a, 1b wellenförmige Ränder aufweist.

Dieser wellenförmige Schnitt ist im Stand der Technik bekannt.

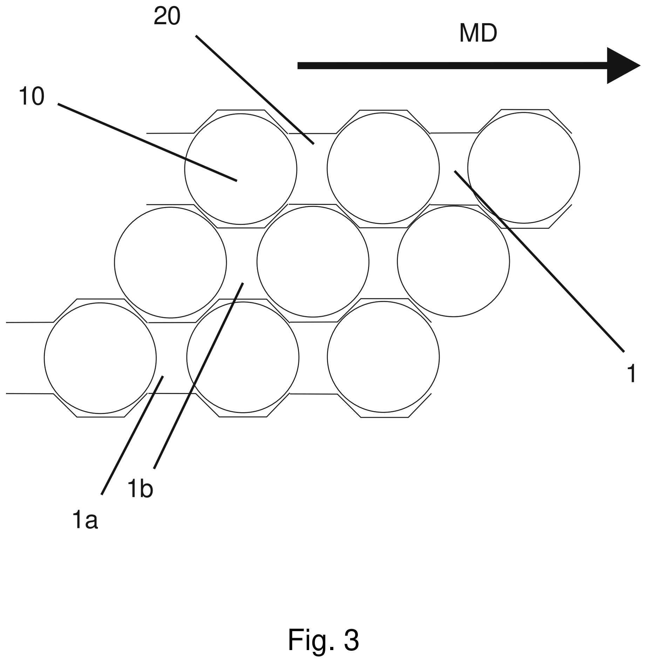

In der Figur 3 ist ebenfalls das Schneiden von mehreren Klebeelementmaterialbahnen 1, 1a, 1b aus einer Mutterrollenbahn gezeigt. Hierzu wird die Muterrollenbahnm mit den auf dem Trennmaterial 20 befindlichen Klebeelementen 10 in Maschinenrichtung MD in einzelne Klebeelementmaterialbahnen 1, 1a, 1b geschnitten, wobei der Schnitt so erfolgt, dass das Trennmaterial 20 der Klebeelementmaterialbahnen 1, 1a, 1b trapezförmige Ränder aufweist.

Dieser trapezförmige Schnitt ist im Stand der Technik nicht bekannt.

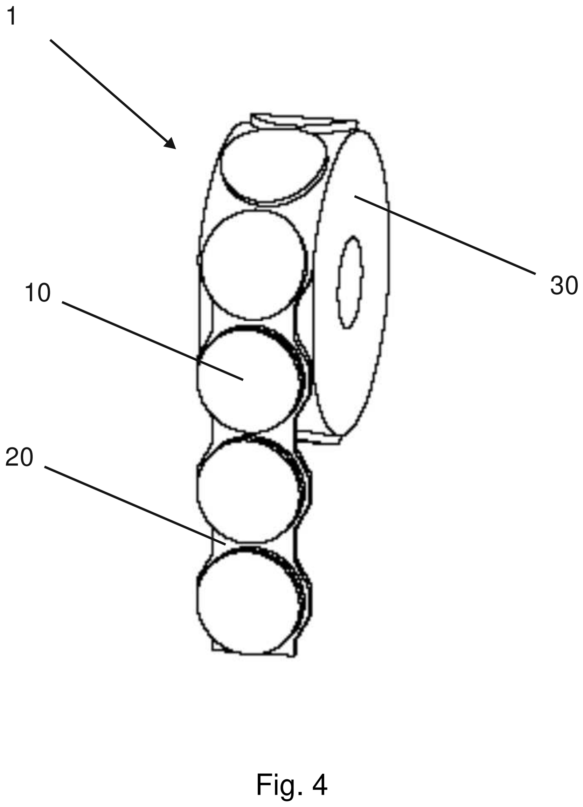

Figur 4 zeigt eine erfindungsgemäße Rolle 30 aus einer Klebeelementmaterialbahn 1 umfassend eine Vielzahl jeweils beabstandet hintereinander angeordneter Klebeelemente 10, die auf einem bahnförmigen Trennmaterial 20 so aufgebracht sind, dass das Trennmaterial 20 wicklungsinnenseitig und die Klebeelemente 10 wicklungsaußenseitig angeordnet sind

### Bezugszeichenliste

- 1, 1a, 1b: Klebeelementmaterialbahnen
- 10: Klebeelement
- 20: Trennmaterial
- 21, 22: trapezförmige Einschnitte
- 23, 24: trapezförmige Abschnitte
- 30: Rolle aus einer Klebeelementmaterialbahn

## Patentansprüche

1. Rolle oder Spule aus einer Klebeelementmaterialbahn umfassend zumindest eine Reihe einer Vielzahl jeweils beabstandet hintereinander angeordneter Klebeelemente, die auf einem bahnförmigen Trennmaterial so aufgebracht sind, dass vorzugsweise das Trennmaterial wicklungsinnenseitig und die Klebeelemente wicklungsaußenseitig angeordnet sind,
wobei jedes Klebelement eine Trägerschicht und eine Klebeschicht aufweist, umfassend eine Klebemasse, vorzugsweise Haftklebemasse, die auf der zum Trennmaterial zugewandten Oberfläche der Trägerschicht vorhanden ist,
**dadurch gekennzeichnet, dass**
zumindest ein Rand oder beide Ränder des Trennmaterials trapezförmige Einschnitte aufweisen, die jeweils zwischen zwei benachbarten Klebeelementen vorhanden sind, ohne dass die Einschnitte die Fläche der Klebeelemente unterschneiden, wobei die Basis der trapezförmigen Einschnitte der gedachte Rand des Liners bildet.

2. Rolle oder Spule aus einer Klebeelementmaterialbahn gemäß Anspruch 1,
**dadurch gekennzeichnet, dass**
die trapezförmige Einschnitte die Form eines gleichschenkligen Trapez auf.

3. Rolle oder Spule aus einer Klebeelementmaterialbahn gemäß Anspruch 1 oder 2,
**dadurch gekennzeichnet, dass**
die trapezförmige Einschnitte alle dieselbe Trapezform aufweisen.

4. Rolle oder Spule aus einer Klebeelementmaterialbahn gemäß zumindest einem der Ansprüche 1 bis 3,
**dadurch gekennzeichnet, dass**
jeweils die vier einen trapezförmigen Einschnitt bildenden Ecken alle einen Radius aufweisen, vorzugsweise alle vier den gleichen Radius, weiter vorzugsweise dass die Ecken aller trapezförmigen Einschnitte den gleichen Radius r aufweisen.

5. Rolle oder Spule aus einer Klebeelementmaterialbahn gemäß Anspruch 1,
**dadurch gekennzeichnet, dass**
der Radius r folgende Bedingung erfüllt: $r \geq 0 und r < d 1 + g 1$

6. Rolle oder Spule aus einer Klebeelementmaterialbahn gemäß zumindest einem der vorherigen Ansprüche,
**dadurch gekennzeichnet, dass**
das Klebeelement eine Grundform aufweist, die eine geschlossene geometrische Form aufweist, insbesondere ausgewählt ist aus der Gruppe bestehend aus Kreisen, Teilkreisen, insbesondere Halbkreisen, Ovalen oder Vielecken, besonders bevorzugt Kreisen.

7. Rolle oder Spule aus einer Klebeelementmaterialbahn gemäß zumindest einem der vorherigen Ansprüche,
**dadurch gekennzeichnet, dass**
die Klebeelemente eine Trägerschicht und eine damit verbundene Klebeschicht umfassen, wobei die Klebeelemente mit der Klebeschicht auf dem Trennmaterial angeordnet sind

8. Verfahren zur Herstellung einer Rolle oder Spule aus einer Klebeelementmaterialbahn gemäß einem der vorhergehenden Ansprüche, umfassend die folgenden Schritte:
i) Ausrüstung einer breiten Bahn Trägerschicht mit einer Klebeschicht und Eindecken mit einem Trennmaterial
ii) gegebenenfalls Wicklung zu einer Mutterrolle
iii) gegebenenfalls Abwicklung der Mutterrolle
iv) Rotatives Stanzen von Klebeelementen und Abgittern des überstehenden Materials
v) Schneiden von Klebeelementmaterialbahnen aus der Mutterrollenbahn mit erfindungsgemäßen trapezförmigen Rändern des Trennmaterial
